# DEMANDE DE BREVET EUROPEEN

(11) **EP 2 626 238 A1**
(43) Date de publication de la demande: **14.08.2013**
(21) Numéro de dépôt: 13154483.5
(22) Date de dépôt: 07.02.2013
(51) Int. Cl.: B60N 2/48

(54) **Appui-tête de siège de véhicule automobile**

(30) Priorité: 13.02.2012 FR 1251342
(71) Demandeur: CENTRE D'ETUDE ET DE RECHERCHE POUR L'AUTOMOBILE (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un appui-tête (1) de siège de véhicule automobile, ledit appui-tête comprenant : une structure principale (2) de support d'un coussin d'appui principal ; une structure annexe (3) de support d'un coussin d'appui annexe ; un dispositif d'articulation (4) reliant lesdites structures entre elles, de sorte que ladite structure annexe soit réglable angulairement, ledit dispositif d'articulation comprenant : deux logements (5,6) prévus sur l'une desdites structures, lesdits logements étant séparés par une zone de transition (7) ; un loquet (8) prévu sur l'autre desdites structures ; un moyen ressort (9) actionnant ledit loquet en verrouillage par insertion dans l'un ou l'autre desdits logements qui définissent deux positions de verrouillage angulaire, le passage d'une position à l'autre se faisant par une continuité de positions intermédiaires où ledit loquet est en appui sur ladite zone de transition à l'encontre dudit moyen ressort.

## Description

L'invention concerne un appui-tête de siège de véhicule automobile.

Il est connu de réaliser un appui-tête de siège de véhicule automobile, ledit appui-tête comprenant :
- une structure principale de support d'un coussin d'appui principal,
- une structure annexe de support d'un coussin d'appui annexe,
- un dispositif d'articulation reliant lesdites structures entre elles, de sorte que ladite structure annexe soit réglable angulairement.

Selon une réalisation connue, l'appui-tête comprend au moins une structure annexe latérale recevant un coussin d'appui latéral et/ou une structure annexe médiane recevant un coussin d'appui nuque.

Dans les réalisations connues, il est courant de prévoir que le dispositif d'articulation comprenne une pince enserrant une partie cylindrique de la structure principale, le maintien de la structure annexe dans la position angulaire choisie se faisant grâce au couple de friction s'exerçant entre ladite pince et ladite partie cylindrique.

Dans un tel agencement, on peut, notamment du fait des dispersions dimensionnelles pouvant exister au niveau de la pince ou de la partie cylindrique - ou du fait d'une usure au fil du temps -, observer un couple de frottement variable d'un appui-tête à l'autre d'une même série.

Et dans certains cas, le couple de frottement peut s'avérer insuffisant pour assurer un bon maintien angulaire de la structure annexe.

Il en résulte que l'usager ne peut utiliser le coussin d'appui annexe qui se dérobe sous le poids de sa tête.

L'invention a pour but de pallier ces inconvénients.

A cet effet, l'invention propose un appui-tête de siège de véhicule automobile, ledit appui-tête comprenant :
- une structure principale de support d'un coussin d'appui principal,
- une structure annexe de support d'un coussin d'appui annexe,
- un dispositif d'articulation reliant lesdites structures entre elles, de sorte que ladite structure annexe soit réglable angulairement,
ledit dispositif d'articulation comprenant :
- deux logements prévus sur l'une desdites structures, lesdits logements étant séparés par une zone de transition,
- un loquet prévu sur l'autre desdites structures,
- un moyen ressort actionnant ledit loquet en verrouillage par insertion dans l'un ou l'autre desdits logements qui définissent deux positions de verrouillage angulaire,
le passage d'une position à l'autre se faisant par une continuité de positions intermédiaires où ledit loquet est en appui sur ladite zone à l'encontre dudit moyen ressort.

Dans cette description, les termes de positionnement dans l'espace (latéral,...) sont pris en référence à l'appui-tête disposé dans le véhicule.

On notera en outre que le terme « axial » est considéré relativement à l'axe de symétrie de la partie cylindrique décrite plus loin.

Avec l'agencement proposé, la structure annexe est fermement maintenue en place dans la position de verrouillage choisie.

En outre, l'effort à fournir pour passer d'une position angulaire à l'autre est sensiblement répétable d'un appui-tête à l'autre d'une même série, puisque les dispersions dimensionnelles n'ont qu'un faible impact sur l'effort à fournir pour réaliser la rotation, cet effort étant principalement conditionné par le moyen ressort mis en oeuvre, sachant qu'il est aisé de réaliser des ressorts de coefficient d'élasticité répétable.

D'autres particularités et avantages de l'invention apparaîtront dans la description qui suit, faite en référence aux figures jointes dans lesquelles :
- la figure 1 est une représentation en perspective partielle d'un appui-tête selon une réalisation,
- la figure 2 est une vue éclatée de détail de la figure 1 représentant une structure annexe et une partie d'un dispositif d'articulation selon une réalisation,

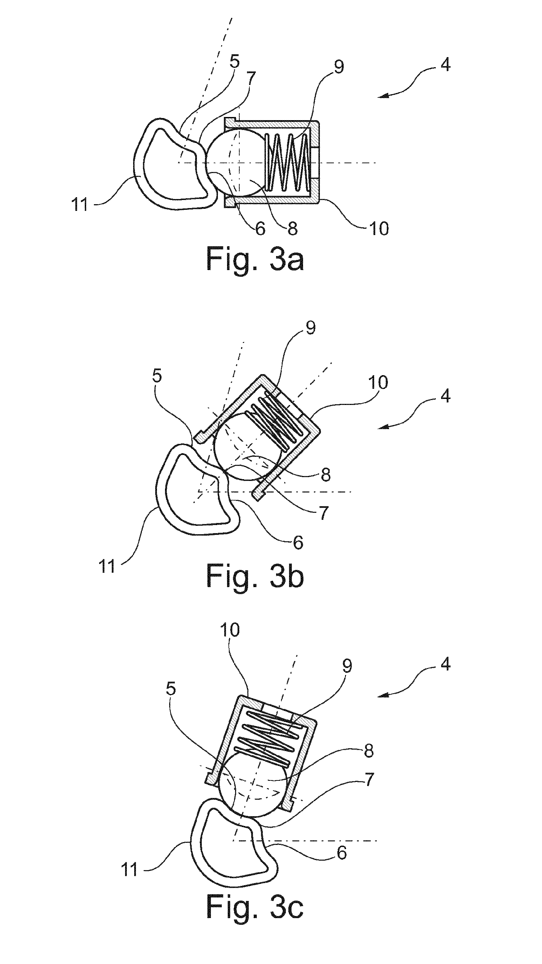

- les figures 3 sont des vues axiales du dispositif d'articulation partiellement représenté en figure 2, la structure annexe étant en première position de verrouillage (3a), en position intermédiaire (3b) et en deuxième position de verrouillage (3c).

En référence aux figures, on décrit un appui-tête 1 de siège de véhicule automobile, ledit appui-tête comprenant :
- une structure principale 2 de support d'un coussin d'appui principal, non représenté,
- une structure annexe 3 de support d'un coussin d'appui annexe, non représenté,
- un dispositif d'articulation 4 reliant lesdites structures entre elles, de sorte que ladite structure annexe soit réglable angulairement,
ledit dispositif d'articulation comprenant :
- deux logements 5,6 prévus sur l'une desdites structures, lesdits logements étant séparés par une zone de transition 7,
- un loquet 8 prévu sur l'autre desdites structures,
- un moyen ressort 9 actionnant ledit loquet en verrouillage par insertion dans l'un ou l'autre desdits logements qui définissent deux positions de verrouillage angulaire,
le passage d'une position à l'autre se faisant par une continuité de positions intermédiaires où ledit loquet est en appui sur ladite zone à l'encontre dudit moyen ressort.

Selon la réalisation représentée, le moyen ressort 9 est solidaire du loquet 8 et monté de sorte que ledit loquet adopte une configuration saillante dans les positions de verrouillage et une configuration rétractée dans les positions intermédiaires.

Selon la réalisation représentée :
- la structure principale 2 comprend une partie cylindrique 11 - ladite partie étant ici issue de ladite structure qui est sous forme d'un tube métallique en forme générale de U replié - pourvue de deux emboutis, ou orifices selon une variante non représentée, décalés angulairement formant les logements 8,
- la structure annexe 3 est pourvue d'un support 10 - ici issu de matière de ladite structure annexe qui est notamment en matériau plastique moulé - sur lequel est monté un ressort à spirales, formant le moyen ressort 9, et une bille, formant loquet 8, ladite bille étant de section adaptée à celle desdits logements.

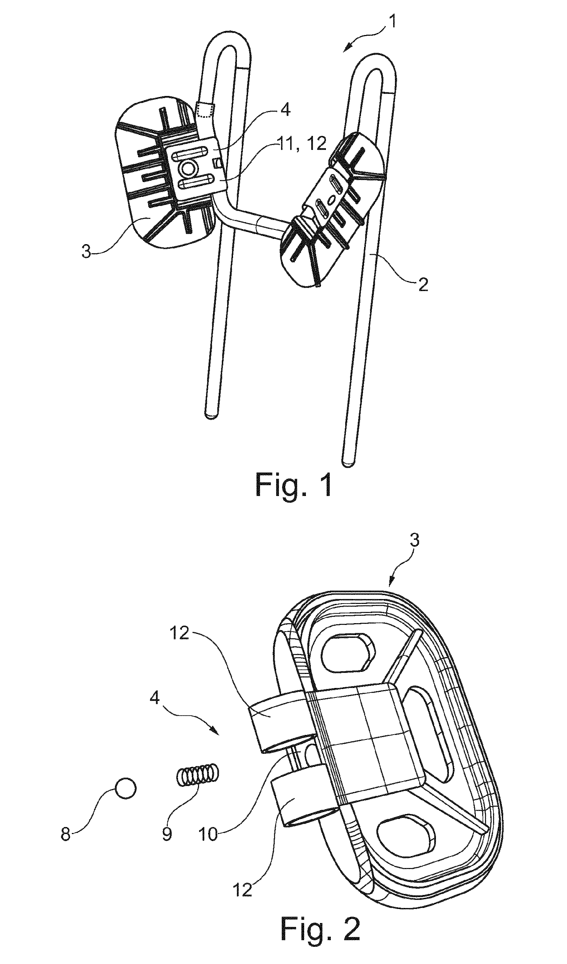

Comme représenté en figure 2, la structure annexe 3 comprend au moins un - ici deux - cerclage 12 destiné à recevoir la partie cylindrique 11 en rotation.

Selon une variante non représentée, le moyen ressort 9 est sous forme d'une lame recourbée en U, le loquet 8 étant formé par la partie médiane du U de manière à être intégré à ladite lame.

Selon la réalisation représentée, la zone de transition 7 forme un bossage agencé pour que les positions intermédiaires soient instables, de sorte que lorsque la structure annexe 3 se trouve dans l'une desdites positions intermédiaires elle soit rappelée vers l'une des positions de verrouillage, de manière à disposer d'un appui-tête 1 pourvu d'un réglage « bi-stable » de ladite structure annexe.

Selon la réalisation représentée, l'appui-tête 1 comprend au moins une - ici deux - structure annexe 3 latérale recevant un coussin d'appui latéral, non représenté.

Selon une réalisation non représentée, l'appui-tête 1 comprend une structure annexe 3 médiane recevant un coussin d'appui nuque.

## Revendications

1. Appui-tête (1) de siège de véhicule automobile, ledit appui-tête comprenant :
• une structure principale (2) de support d'un coussin d'appui principal,
• une structure annexe (3) de support d'un coussin d'appui annexe,
• un dispositif d'articulation (4) reliant lesdites structures entre elles, de sorte que ladite structure annexe soit réglable angulairement,
ledit appui-tête étant **caractérisé en ce que** ledit dispositif d'articulation comprend :
• deux logements (5,6) prévus sur l'une desdites structures, lesdits logements étant séparés par une zone de transition (7),
• un loquet (8) prévu sur l'autre desdites structures,
• un moyen ressort (9) actionnant ledit loquet en verrouillage par insertion dans l'un ou l'autre desdits logements qui définissent deux positions de verrouillage angulaire,
le passage d'une position à l'autre se faisant par une continuité de positions intermédiaires où ledit loquet est en appui sur ladite zone de transition à l'encontre dudit moyen ressort.

2. Appui-tête selon la revendication 1, **caractérisé en ce que** le moyen ressort (9) est solidaire du loquet (8) et monté de sorte que ledit loquet adopte une configuration saillante dans les positions de verrouillage et une configuration rétractée dans les positions intermédiaires.

3. Appui-tête selon la revendication 2, **caractérisé en ce que** :
• la structure principale (2) comprend une partie cylindrique (11) pourvue de deux emboutis, ou orifices, décalés angulairement formant les logements (5,6),
• la structure annexe (3) est pourvue d'un support (10) sur lequel est monté un ressort à spirales, formant le moyen ressort (9), et une bille, formant loquet (8), ladite bille étant de section adaptée à celle desdits logements.

4. Appui-tête selon la revendication 2, **caractérisé en ce que** le moyen ressort (9) est sous forme d'une lame recourbée en U, le loquet (8) étant formé par la partie médiane du U de manière à être intégré à ladite lame.

5. Appui-tête selon l'une quelconque des revendications 1 à 4, **caractérisé en ce que** la zone de transition (7) forme un bossage agencé pour que les positions intermédiaires soient instables, de sorte que lorsque la structure annexe (3) se trouve dans l'une desdites positions intermédiaires elle soit rappelée vers l'une des positions de verrouillage.

6. Appui-tête selon l'une quelconque des revendications 1 à 5, **caractérisé en ce qu'il** comprend au moins une structure annexe (3) latérale recevant un coussin d'appui latéral.

7. Appui-tête selon l'une quelconque des revendications 1 à 6, **caractérisé en ce qu'il** comprend une structure annexe (3) médiane recevant un coussin d'appui nuque.
